Europäisches Patentamt

European Patent Office

Office européen des brevets

(19)

(11) **EP 1 389 426 A1**

## (12) EUROPEAN PATENT APPLICATION
published in accordance with Art. 158(3) EPC

(43) Date of publication:
**18.02.2004 Bulletin 2004/08**

(21) Application number: **01925905.0**

(22) Date of filing: **25.04.2001**

(51) Int Cl.[7]: **A23C 9/13**, A23L 2/38,
A23L 1/20

(86) International application number:
**PCT/JP2001/003569**

(87) International publication number:
**WO 2002/089593 (14.11.2002 Gazette 2002/46)**

(84) Designated Contracting States:
**AT BE CH CY DE DK ES FI FR GB GR IE IT LI LU
MC NL PT SE TR**

(71) Applicant: **Kabushiki Kaisha Yakult Honsha
Minato-ku, Tokyo 105-8660 (JP)**

(72) Inventors:
• **KUDO, Satoshi,
Kabushiki Kaisha Yakult Honsha
Tokyo 105-8660 (JP)**

• **SHIMIZU, Kanako
Niiza-shi, Saitama 352-0015 (JP)**
• **YAMATOYA, Hideyuki
Kagoshima-shi, Kagoshima 891-1204 (JP)**
• **MIZUSAWA, Naomi,
Kabushiki Kaisha Yakult Honsha
Tokyo 105-8660 (JP)**

(74) Representative: **Texier, Christian et al
Cabinet Régimbeau
20, rue de Chazelles
75847 Paris cedex 17 (FR)**

## (54) FERMENTED FOODS AND PROCESS FOR PRODUCING THE SAME

(57) The present invention relates to a fermented food and process for producing the same, in which the food contains a sufficient amount of conjugated fatty acid and is excellent in digestivity and absorbability, physiological effects, safety, sensory properties, and the like. The fermented food is obtained by adding a conjugated fatty acid in the form of a glyceride to a fermentation medium either before or after the fermentation by the fermenting bacterium, and the final fermented food product contains such conjugated fatty acid in the form of a glyceride. The conjugated fatty acid of the glyceride type is a glyceride derivative containing a fatty acid having conjugated double bonds (a conjugated fatty acid) as its constituent fatty acid, and sustains many of useful physiological activities of the conjugated fatty acid while coping with the inhibitory action of free fatty acids to the fermenting bacterium.

**Fig.1**

**EP 1 389 426 A1**

**Description**

FIELD OF THE INVENTION

The present invention relates to a fermented food containing a conjugated fatty acid and process for producing the same.

BACKGROUND OF THE INVENTION

Conjugated fatty acids, which are either found in natural resources or generated during food production process, are fatty acids in which adjacent carbon atoms are bound in double bonds with respective single bonds between them. Among those, conjugated linoleic acid (CLA) having one conjugated diene within the fatty acid molecule with 18 carbon atoms has been reported to have anti-cancer effect, anti-allergy effect, anti-diabetes effect, and various other useful physiological activities. For example, Japanese Patent No. 2745245 (or its corresponding international Publication WO 94/16690) discloses a method for enhancing weight gain and feed efficiency in an animal, which comprises administering the animal with CLA. Also, Japanese National Phase Publication No. 10-508189 (or its corresponding International Publication WO 96/06605) discloses a method for reducing body fat in an animal, which comprises administering the animal with CLD.

On the other hand, CLAs have already been industrially produced and marketed. Such commercially available CLA products include, for example, "CLA 80 Active Linol" (product name) manufactured by Rinoru Oil Mills Co.,Ltd. and "Tonalin" (product name) manufactured by PharmaNutrients Inc. These CLA products are produced by conjugating a linoleic acid-containing oil or a natural cis-type linoleic acid (C 18 : 2) in the presence of alkaline. However, the CLA produced is in the form of a free fatty acid type and contains cis-9, trans-11- or trans-9, cis-11-, trans-10, cis-12 as the principal component as well as other positional/geometric isomers.

SUMMARY OF THE INVENTION

In the process using such commercially available free fatty acid type CLA products to produce a fermented food containing CLA, the present inventors found that such free fatty acid type CLA product is highly toxic to the bacterium and that addition of such product to the fermentation medium results in the delay of fermentation, and in some extreme cases, in the death of the inoculated bacterium and the total absence of fermentation.

The inventors also found that, addition of the free fatty acid type CLA product to the fermentation medium which has already undergone the standard fermentation process results in the decrease in the number of live bacteria, and in some extreme cases, in the total death of the bacterium. The resulting product also suffered from bitterness and astringency which are inherent to the fatty acid.

Thus, an object of the present invention is to provide a fermented food which contains a suffient amount of conjugated fatty acid and is excellent in digestivity and absorbability, physiological effects, safety, sensory properties and the like while coping with the inhibitory action of free fatty acids to the growth of the fermenting bacterium. Another object of the present invention is to provide a process for producing such fermented food.

According to one aspect of the present invention, the above objects can be attained by a fermented food which comprises a fermented food base obtained by adding a fermenting bacterium to an adequate medium for growing the fermenting bacterium and a glyceride derivative containing a fatty acid having conjugated double bonds as its constituent fatty acid.

The present invention provides a fermented food which is expected to provide many of the useful physiological activities inherent to the conjugated fatty acid glyceride, and which is also excellent in improving properties such as digestibility and absorption, physiological activity, safety, and sensory characteristics.

The present invention also provides a process for producing such a fermented food, comprising the steps of adding a fermenting bacterium to an adequate medium for growing said fermenting bacterium to obtain a fermented food base, and adding a glyceride derivative containing a fatty acid having conjugated double bonds as its constituent fatty acid to said medium before or after the fermentation by said fermenting bacterium.

In the fermented food according to the present invention, the food base contains a conjugated fatty acid in the form of a glyceride derivative (hereinafter referred to as a 'conjugated fatty acid glyceride") which contains a fatty acid having conjugated double bonds (hereinafter referred to as a "conjugated fatty acid") as its constituent fatty acid. As a result of the use of such conjugated fatty acid glyceride, growth of the fermenting bacterium in the fermented food base is not inhibited, and the final fermented food product has a sufficient content of the conjugated fatty acid glyceride as well as excellent digestibility and absorption, physiological action, safety, and sensory properties.

The conjugated fatty acid glyceride used in the present invention is a conjugated fatty acid which is bonded to glycerin by ester bond, and may be any of the monoglyceride wherein one conjugated fatty acid molecule is bonded to one glycerin molecule, the diglyceride wherein two conjugated fatty acid molecules are bonded to one glycerin molecule, and the triglyceride wherein three conjugated fatty acid molecules are bonded to one glycerin molecule. The triglyceride is particularly preferable to use in the present invention since the resulting product can enjoy physiological effects of the constituent conjugated fatty acid to furthest extent.

The constituent conjugated fatty acid may be any fatty acid as long as it has conjugated double bonds, and preferably, the one having favorable physiological activity since the conjugated fatty acid glyceride will be decomposed after its ingestion by a digestive enzyme or the like into the fatty acid having the favorable physiological activity, which is then absorbed. For example, the conjugated fatty acids include α-linolenic acid, γ-linolenic acid, arachidonic acid, eicosapentaenoic acid (EPA), and docosahexaenoic acid (DHA) having conjugated double bonds formed, as well as conjugated linoleic acid (CLA), eleostearic acid, and parinaric acid, and among these, the preferred is the use of CLA since it has various excellent physiological effects.

The conjugated fatty acid glyceride may be produced by any of conventional methods such as transesterification and esterification using a catalyst lipase. For example, a glyceride derivative of CLA may be produced by a known transesterification process using a biological catalyst lipase. According to this method, the glyceride derivative in which approximately 15 % of conjugated fatty acid is incorporated can be produced. Production by esterification or ester synthetic reaction is also known, and the mono-, di-, or tri-derivatives produced by this method is known to have a CLA concentration of as high as about 70 %. This conjugated fatty acid glyceride is known to be digested and absorbed at a rate higher than that of the aforementioned free fatty acid type CLA, and therefore, the conjugated fatty acid glyceride exhibits excellent effect of improving lipid metaboilsm.

The conjugated fatty acid glyceride also exhibits better influence to the flavor of the food product compared to the free fatty acid type CLA when it is used in foods, and therefore, the fermented food according to the present invention is excellent in enjoying such influence.

The fermented food base to which the thus produced conjugated fatty acid glyceride is added in the present invention may be any of the fermented food bases produced by adding a fermenting bacterium to a medium which is appropriate for its growth, for example, such as a fermented diary food, a fermented soy milk food, a fermented fruit juice, a fermented vegetable juice, etc.

In the present invention, the bacteria used for the production of such fermented food base may be any of lactic acid bacteria of various species, bacteria of genus *Bifidobacterium,* yeast, *Bacillus subtilis,* and the like. Especially, the lactic acid bacteria and the bacteria of genus *Bifidobacterium* are preferable for use in the preparation of the femented food base since they are scarcely affected by toxicity of the conjugated fatty acid contained in the conjugated fatty acid glyceride to be added to the fermented food base. Such fermented food bases include, for example, fermented milk, lactic acid beverage, cheese, etc.

The lactic acid bacteria and the bacteria of genus *Bifidobacterium* which may be used for the fermentation of the food base include, for example, bacteria of genus *Lactobacillus,* such as *Lactobacillus casei, Lactobacillus acidophilus, Lactobacillus zeae, Lactobacillus helveticus, Lactobacillus salivalius, Lactobacillus gasseri, Lactobacillus fermentum, Lactobacillus jugurti, Lactobacillus delbrueckii* subsp. *bulgaricus, Lactobacillus delbrueckii* subsp. *delbrueckii, Lactobacillus johnsonii* and *Lactobacillus sakei;* bacteria of genus *Streptococcus,* such as *Streptococcus thermophilus;* bacteria of genus *Lactococcus,* such as *Lactococcus lactis* subsp. *lactis, Lactococcus actis* subsp. *cremoris, Lactococcus plantarum* and *Lactococcus raffinolactis;* bacteria of genus *Enterococcus,* such as *Enterococcus faecalis* and *Enterococcus faecium;* bacteria of genus *Bifidobacterium,* such as *Bifidobacterium breve, Bifidobacterium bifidum, Bifidobacterium longum, Bifidobacterium adolescentis* and *Bifidobacterium catenulatum;* and bacteria of genus Leuconostoc, such as *Leuconostoc lactis,* which may be used alone or in combination of two ore more.

Among these, the preferred in view of the improved growth during the production of the fermented food, improved survival in the storage of the fermented food, and flavor of the fermented food are *Lactobacillus casei, Lactobacillus helveticus, Lactobacillus salivalius, Lactobacillus bulgaricus, Lactobacillus gasseri, Lactobacillus acidophilus, Lactobacillus sakei, Lactococcus plantarum, Lactococcus laffinolactis, Lactococcus lactis* subsp. *lactis, Lactococcus lactis* subsp. *cremoris, Streptococcus thermophilus, Leuconostoc lactis,* and *Bifidobacterium breve,* which may be used alone or in combination of two ore more, and the most preferred are *Lactobacillus casei, Lactobacillus helveticus, Lactobacillus salivalius, Lactobacillus bulgaricus, Lactobacillus acidophilus, Lactococcus plantarum, Lactococcus lactis* subsp. *Lactis,* and *Streptococcus thermophilus.*

Amount of the conjugated fatty acid glyceride added to the fermented food base generally varies according to the content of the conjugated fatty acid in the glyceride, type of the bacterium used, form of the fermented food base to which it is added, and the like. Accordingly, the amount added may be determined to suit such conditions by taking influence on the flavor of the product into consideration. For example, in the case of addition to a fermented milk, the conjugated fatty acid glyceride may be added at an amount of about 0.1 t% by weight to 8.0 % by weight (hereinafter simply referred to as "%"), and in particular, at an amount of 0.3 % to 5.0 % per total fermented food product. Addition of less than 0.1 % may be insufficient to reliably utilize various physiological effects of the conjugated fatty acid, and addition of over 8.0 % may adversely affect the flavor of the final fermented food product.

The fermented food according to the present invention can be produced in the usual manner. For example, a fermented milk may be produced by inoculating and cultivating a lactic acid bacterium or a bacterium of genus *Bifidobacterium* in a sterilized milk medium, homogenizing the medium to prepare the fermented milk base, adding a separately prepared syrup of the conjugated fatty acid glyceride emulsified with an emulsifier to the fermented milk base, homogenizing the mixture in a homogenizer or the like, and adding a flavor to obtain the final product. The conjugated fatty acid glyceride may also be added to the milk medium before or after the cultivation (fermentation), and the propagation ability and survival rate of the bacterium remains intact even in such a case.

The thus produced fermented food according to the present invention may be a fermented milk, a fermented soy milk, a fermented fruit juice, a fermented vegetable emalsion juice, or the like in the form of, for example, a solid, a liquid, or a powder. Among these, fermented milk is particularly preferable in view of enjoying the merit of prevention of the flavor degradation by the addition of the conjugated fatty acid. In addition, such fermented food may have any material added thereto as long as the material is the one normally used in foods. For example, such materials include sugars such as glucose, sucrose, fructose, and honey; sugar alcohols such as sorbitol, xylitol, erythritol, lactitol, and palatinit; high intensity sweeteners such as sucralose, aspartame, stevia, acesulfame potassium, and alitame; emulsifiers such as sugar fatty acid ester, polyglycerin fatty acid ester, and lecithin; and thickening (stabilizing) agents such as agar, gelatin, carragheenan, guar gum, xanthan gum, pectin, and locust bean gum. The fermented food according to the present invention may also contain vitamin A, vitamin B, vitamin C, vitamin E, or other vitamins, or a herb extract.

According to the present invention, the problem of retarded growth and death of the bacterium by the addition of the aforementioned free fatty acid type CLA to the fermented food base is suppressed by using the conjugated fatty acid in the form of a glyceride. This effect is believed to be unique to the conjugated fatty acid in the form of a glyceride since death of the bacterium was suppressed in the case of a lactic acid bacterium by using a free oleic acid and not by oleic acid in the form of a glyceride as demonstrated in the after-mentioned experimental example carried out for the purpose of comparison.

As described above, the present invention provides a fermented food containing a sufficient amount of conjugated fatty acid glyceride with no adverse effects on the growth of the bacterium during the production process and on the growth or survival of the bacterium during storage of the fermented food. The thus produced fermented food enjoys merits including excellent digestibility and absorption, physiological action, safety, and sensory properties.

Furthermore, according to the present invention, the fermentation is not inhibited even when the medium contains a conjugated fatty acid, and the number of live bacteria does not decrease when the conjugated fatty acid is added to the fermenting bacterium medium. The fermented food according to the present invention enjoys excellent flavor and improved digestibility and absorption, and simultaneously, various advantageous effects inherent to the conjugated fatty acid such as action of reducing body fat, carcinostatic action, and anti-allergic action.

BRIEF DESCRIPTION OF DRAWINGS

FIG. 1 shows the results of growth test of *Streptococcus thermophilus* in Example 1, where the ordinate denotes the number of live bacteria, while the abscissa denotes the growth period (hrs).

FIG. 2 shows the results of growth test of *Lactobacillus casei* in Example 1, where the ordinate denotes the number of live bacteria, while the abscissa denotes the growth period (hrs).

FIG. 3 shows the results of growth test of *Lactocccus lactis* subsp. *lactis* in Example 3, where the ordinate denotes the number of live bacteria, while the abscissa denotes the growth period (hrs).

FIG. 4 shows the results of growth test of *Bifidobacterium breve* in Example 3, where the ordinate denotes the number of live bacteria, while the abscissa denotes the growth period (hrs).

FIG. 5 shows the results of growth test of *Lactocccus lactis* subsp. *lactis* YIT 2027 strain in Example 4, where the ordinate denotes the number of live bacteria, while the abscissa denotes the growth period (hrs).

DESCRIPTION OF THE PREFERRED EMBODIMENTS

The present invention will now be described in further detail by referring to the following embodiments, each of which is illustrated by way of an example and has no means restricting the scope of the present invention.

Production Example 1: = Production of conjugated fatty acid glyceride =

A conjugated fatty acid glyceride was prepared by the following procedure:

(1) 75 g of CLA 80 Active Linol (manufactured by Rinoru Oil Mills Co., Ltd.), 8.2 g of Glycerol (analytical reagent grade, manufactured by Wako Pure Chemicals Industries, Ltd.), and 11.25 g of Lipozyme IM (manufactured by Novo Nordisk Ltd.) were weighed and placed in Kjeldahl flask.

(2) The mixture was esterified for 11 hours while evaporating in a rotary evaporator at a reduced pressure and stirring at about 70 °C.

(3) The reaction product was filtered to remove Lipozyme IM and obtain conjugated linoleic acid glyceride (G-CLA).

When amount of the G-CLA)in the resulting reaction solution was confirmed by thin layer chromatography and iodine color development, 73.3 % was triglyceride and the remainder was di- or monoglycerides.

**Example 1: = Fermented dairy food 1 =**

Fresh raw milk was centrifuged for cream separation to prepare skim milk, and G-CLA prepared in Production Example 1 was added to the thus produced skim milk at an amount of 0.2, 0.4, and 1.0 %, respectively, to obtain three sorts of mediums. After homogenization, and sterilization at 100 °C for 10 minutes, 0.1 % of *Streptococcus thermophilus* YIT 2001 strain (FERM BP-7538) was inoculated to each of the mediums, and the mediums were cultivated at 37 °C for 24 hours.

In a similar manner, sterilized milk mediums having added thereto 1.0 and 3.0 % of G-CLA, respectively, were inoculated with 0.1 % of *Lactobacillus casei* YIT 9029 strain (FERM BP-1366), respectively, and the milk mediums were cultivated at 37 °C for 50 hours. As a control, a similar procedure was carried out by adding 3.0 % of butter oil instead of G-CLA.

**(Comparative Example 1)**

The cultivation was conducted under similar conditions as those of Example 1 by using *Streptococcus thermophilus* YIT 2001 and by adding free CLA (CLA Active Linol, manufactured by Rinoru Oil Mills Co.,Ltd.) instead of G-CLA.

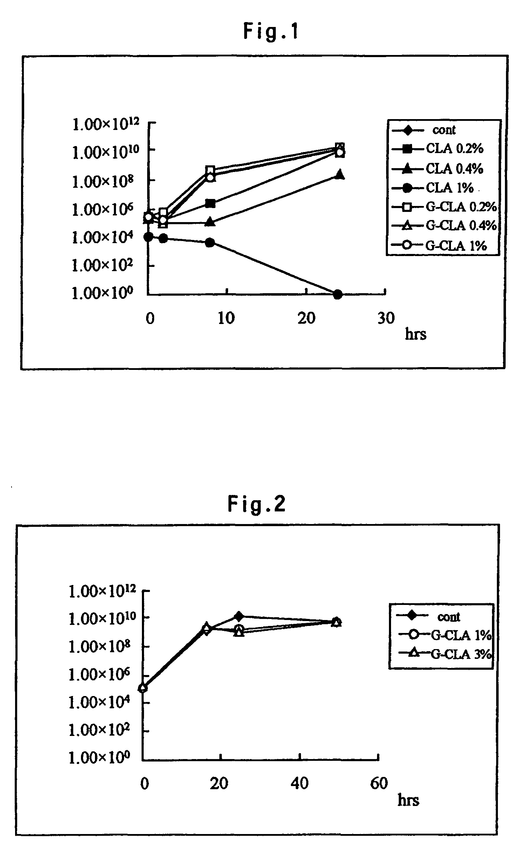

The cultivation was monitored by measuring acidity by titration and counting the number of live bacteria. FIG. 1 shows the results of the growth test for *Streptococcus thermophilus* and FIG. 2 shows the results of the growth test for *Lactobacillus casei*. As shown in FIGS. 1 and 2, *Streptococcus thermophilus* exhibited retarded growth after addition of the free CLA while the one having G-CLA added thereto exhibited no significant difference in the growth with the control. The results demonstrate that the growth of the bacteria is not affected by the addition of G-CLA.

**Example 2: = Fermented dairy food 2 =**

20 % skim milk solution was sterilized by UHT sterilization to obtain two identical mediums. 0.1 % *Lactobacillus casei* YIT 9029 for one of the mediums and 0.1 % *Streptococcus thermophilus* YIT 2001 for other of the mediums were inoculated, respectively. After cultivating at 37 °C for 16 hours, each of the culture mediums was homogenized, and 63 parts by weight of each culture medium was mixed with 37 parts by weight of a syrup (12 % high fructose glicose liquid sugar solution) to produce a fermented milk. To each resulting fermented milk was added G-CLA prepared in Production Example 1 at an amount of 1.0, 3.0, and 5.0 %, respectively, and each mixture was cooled to 10 °C.

**(Comparative Example 2)**

To the fermented milk which was the same as Example 1 was added free CLA (CLA 80 Active Linol, manufactured by Rinoru Oil Mills Co.,Ltd.) instead of G-CLA, and the mixture was cooled to 10 °C. These samples of Example 2, Comparative Example 2 and a control having no CLA added thereto were stored at room temperature for 22 hours, and the number of live bacteria in each of these samples was monitored during the storage. The results are shown in Table 1.

Table 1

|  | bacterium | No | Oil | $N_2$ | $N_4$ | $N_8$ | $N_{22}$ |
|---|---|---|---|---|---|---|---|
| Cont. | S.T. | $1.3 \times 10^9$ | 1.0% | $1.68 \times 10^9$ | $1.31 \times 10^9$ | $1.19 \times 10^9$ | $7.72 \times 10^8$ |
| E-2 | S.T. | $1.24 \times 10^9$ | 1 % | $1.24 \times 10^9$ | $1.53 \times 10^9$ | $1.47 \times 10^9$ | $1.27 \times 109$ |
|  |  |  | 3% | $2.33 \times 10^9$ | $1.10 \times 10^9$ | $9.28 \times 10^8$ | $6.95 \times 10^8$ |
|  |  |  | 5% | $1.57 \times 10^9$ | $1.21 \times 10^9$ | $1.32 \times 10^9$ | $8.52 \times 10^8$ |

Table 1   (continued)

| | bacterium | No | Oil | $N_2$ | $N_4$ | $N_8$ | $N_{22}$ |
|---|---|---|---|---|---|---|---|
| C-2 | S.T. | $1.24 \times 10^9$ | 1 % | 20> | 20> | 20> | 20> |
| | | | 3 % | 20> | 20> | 20> | 20> |
| | | | 5 % | 20> | 20> | 20> | 20> |
| Cont. | L.C. | $4.67 \times 10^7$ | 3% | $5.59 \times 10^7$ | $8.94 \times 10^7$ | $8.33 \times 10^7$ | $1.84 \times 10^8$ |
| E-2 | L.C. | $6.97 \times 10^7$ | 1% | $4.57 \times 10^7$ | $6.30 \times 10^7$ | $6.30 \times 10^7$ | $1.95 \times 10^8$ |
| | | | 3% | $5.18 \times 10^7$ | $4.57 \times 10^7$ | $4.98 \times 10^7$ | $1.59 \times 10^8$ |
| | | | 5% | $5.08 \times 10^7$ | $4.98 \times 10^7$ | $7.42 \times 10^7$ | $1.79 \times 108$ |

"Cont." : Control; "E-2" : Example 2; "C-2" :Comparative Example 2;

"S.T." : *Streptococcus thermophilus* YIT 2001; "L.C." : *Lactobacillus casei* YIT 9029;

"No" : Number of live bacteria before strage; "Oil" : Content of CLA or G-CLA added;

"$N_2$", "$N_4$", "$N_8$", "$N_{22}$" : Number of live bacteria after strage for 2, 4, 8 and 22 hours.

As shown in Table 1, the fermented milk having G-CLA added thereto exhibited no significant decrease in the number of live bacteria while the fermented milk having CLA added thereto exhibited drastic decrease in the number of live *Streptococcus thermophilus.*

**Example 3: = Fermented soy milk food 1 =**

To soy milk containing 4 % corn oil was added G-CLA at an amount of 0.5 %, 1,0 %, and 3.0 %, respectively, to obtain three sorts of mediums. After homogenization and sterilization in an autoclave at 121 °C for 10 minutes, 0.1 % of *Bifidobacterium breve* YIT 4065 strain (FERM BP-6223) was inoculated to each of the mediums and the mediums were cultivated at 37 °C. A similar procedure was carried out by inoculating *Lactocccus lactis* subsp. *lactis* YIT2027 strain (FERM BP-6224) and adding G-CLA at an amount of 0.2, 0.4, and 1.0 %, respectively. As a control, fermentation was conducted in a similar procedure by adding 3.0 % of corn oil instead of adding G-CLA.

**(Comparative Example 3)**

The cultivation was conducted at 37 °C under similar conditions as those of Example 3 by using *Bifidobacterium breve* YIT 4065 strain and adding free CLA (CLA Active Linol, manufactured by Rinoru Oil Mills Co.,Ltd.) instead of G-CLA.

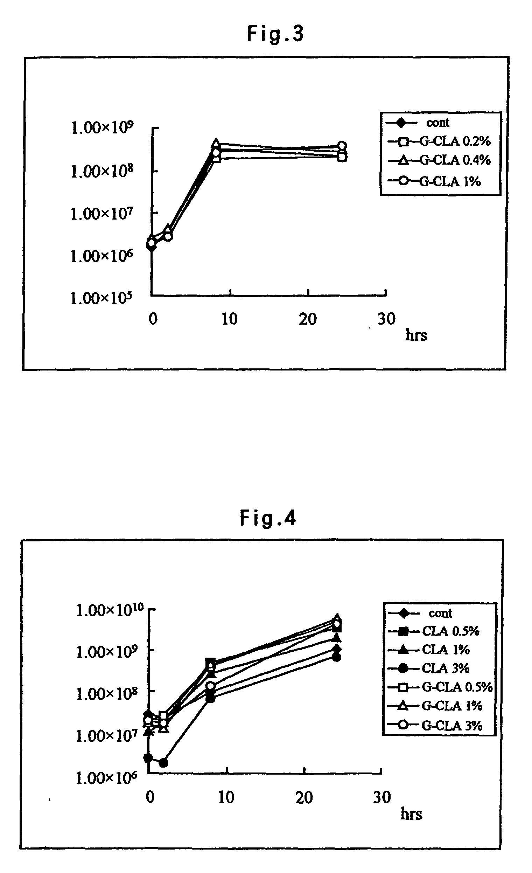

The cultivation was monitored by measuring acidity by titration and counting the number of live bacteria. FIG. 3 shows the results of the growth test for *Lactocccus lactis* subsp. *lactis* YIT 2027 strain, and FIG. 4 the results of the growth test for *Bifidobacterium breve.* As shown in FIGS. 3 and 4, no influence was found on the growth of *Bifidobacterium breve* with the addition of 0.5 % of the free CLA, while growth was significantly retarded with the addition of 1.0 % or more of the free type CLA. The samples having G-CLA added thereto exhibited no significant difference in growth with the control, and this results demonstrate that the growth of the bacterium is not affected by the addition of G-CLA.

**Example 4: = Fermented soy milk food 2 =**

Soy milk containing 4 % of corn oil was homogenized, and sterilized in an autoclave at 121 °C for 10 minutes. To this soy milk was added 0.1 % of *Lactocccus lactis* subsp. *lactis* YIT 2027 srain, and after cultivating the at 37 °C for 20 hours, G-CLA was added to the culture medium at an amount of 0.2 %, 0.4 %, and 1.0 %, respectively, to obtain three samples. Each of the culture mediums was sealed in a glass container, and stored at 10 °C for 14 days.

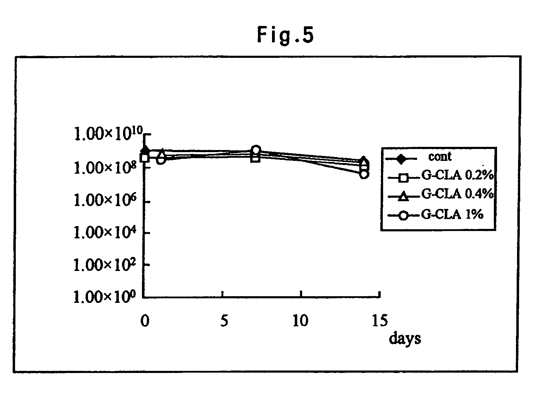

As a control, the culture medium having 1.0 % of corn oil added instead of G-CLA was prepared and stored under similar condition. These samples were monitored for their number of live bacteria during the storage. Fig. 5 shows the results of the survival test for *Lactocccus lactis* subsp. *lactis* YIT 2027 strain. As shown in FIG. 5, decrease in the number of live bacteria was not observed in the samples having G-CLA added thereto.

**Experimental Example 1: = Fermented dairy food =**

Fresh raw milk was centrifuged for cream separation to prepare skim milk, and to this skim milk was added 0.01 % of free oleic acid or oleic acid triglyceride to obtain two sorts of mediums.. After homogenization and sterilization in an autoclave at 100 °C for 10 minutes, 0.1 % of *Lactobacillus casei* YIT 9029 strain was inoculated to each of the mediums. The mediums were cultivated at 37 °C until growth of the bacterium was terminated.

The culture mediums were stored at 10 °C for 14 days, and the number of live bacteria was counted. The number of live bacteria of the sample having oleic acid triglyceride added was about one third of the sample having oleic acid added thereto.

**Example 5: = Difference in the type of bacterium =**

10 % skim milk was used to prepare three sorts of mediums, thai is, a first sort of CLA-free skim milk, a second sort which contains 1.0 % of CLA (conjugated linoleic acid, manufactured by Rinoru Oil Mills Co.,Ltd.) and a third sort which contains 1.0 % of G-CLA (conjugated linoleic acid glyceride, Production Example 1), and these mediums were homogenized. To all of these skim milk based mediums were further added 1 % of glucose and 0.1 % of protein peptide to facilitate bacterial growth. After sterilization at 100 °C for 10 minutes, each sort of the mediums was inoculated with 0.2 % of one of 12 lactic acid bacterium strains, and cultivation was continued for 24 hours at the optimal growth temperature of the strain to observe pH alteration. The results are shown in Table 2.

Table 2

| bacterium | | pH | | |
| --- | --- | --- | --- | --- |
| Genus Species sub sp. | Strain | CLA-free | 1.0 % CLA | 1.0 % G-CLA |
| *Lactobacillus casei* | Y1T9029 | 4.10 | 4.96 | 4.12 |
| *Lactobacillus delbrueckii*  s.s. *lactis* | ATCC12315 | 3.96 | 4.52 | 3.98 |
| *Lactobacillus salivalis*  s.s. *salicinius* | ATCC11742 | 4.32 | 5.65 | 4.33 |
| *Lactobacillus delbrueckii*  s.s. *bulgarics* | YIT0176 | 4.02 | 5.95 | 3.98 |
| *Lactobacillus gasseri* | DSM20243 | 5.18 | 5.43 | 5.18 |
| *Lactobacillus acidophilus* | JCM1028 | 4.41 | 5.02 | 4.49 |
| *Lactobacillus sakei*  s.s. *sakei* | JCM1157 | 4.72 | 4.95 | 4.63 |
| *Lactobacillus plantarum* | ATCC43199 | 4.74 | 5.95 | 4.85 |
| *Lactobacillus raffinolactis* | ATCC43920 | 4.50 | 4.74 | 4.48 |
| *Lactobacillus lactis*  s.s. *cremoris* | ATCC14365 | 4.30 | 4.49 | 4.33 |
| *Lactobacillus thermophilus* | Y1T2001 | 4.35 | 6.10 | 4.35 |
| *Lactobacillus lactis* | ATCC19256 | 5.29 | 5.37 | 5.30 |

As the result, the samples containing G-CLA exhibited good growth of the bacterium. As shown in Table 2, it is confirmed that the effect of preventing the growth inhibition by CLA is remarkable when the G-CLA is used with *Lactobacillus casei, Lactobacillus helveticus, Lactobacillus salivalius, Lactobacillus bulgaricus, Lactobacillus acidophilus, Lactococcus plantarum,* and *Streptococcus thermophilus.*

**Example 6: = Fermented dairy food 3 =**

**(Preparation of culture medium)**

80 g of skim milk, 10 g of G-CLA, and 1 g of vitamin E oil were dissolved in hot water to a total weight of 400 g. This solution was homogenized at 15 MPa (150 kgf/cm$^2$), sterilized at 120 °C for 3 seconds, and inoculated with 0.1 % of *Lactobacillus casei* YIT 9029 strain and *Streptococcus thermophilus* YIT 2001 strain, respectively. The culture medium was cultivated at 37 °C for 20 hours.

**(Preparation of syrup)**

50 g of sugar, 10 g of galacto oligosaccharide, 30 g of polydextrose, 20 g of concentrated orange juice, 0.3 g of vitamin C, and 0.1 g of iron citrate were dissolved in hot water to a total weight of 600 g, and this solution was sterilized at 120 °C for 3 seconds.

The culture medium and the syrup were cooled to 10 °C, and mixed. To the mixture were added 0.1 % of yogurt flavor (manufactured by T. Hasegawa Co., Ltd.). The mixture was homogenized at 15 MPa (150 kgf/cm$^2$, and filled in a glass bottle.

The resulting fermented milk product had excellent flavor, and bacterial growth was not suppressed during the cultivation. When this product was stored at 10 °C for 14 days, bacterial death was at a level substantially equivalent to that of the one having no G-CLA added thereto and the physical properties thereof were also stable.

**(Comparative Example 4)**

A culture medium (390 g) was prepared in accordance with a manner similar to the procedure of Example 6 except that no G-CLA was added to the medium, and the resulting culture medium was cooled to 10 °C. This culture medium was mixed with 600 g of the syrup (10 °C) which was same as the one used in Example 6, and with 10 g of CLA (CLA 80 Active Linol, manufactured by Rinoru Oil Mills Co.,Ltd.) and 0.1 % of yogurt flavor (manufactured by T. Hasegawa Co., Ltd.). The mixture was homogenized at 15 Mpa and filled in a glass bottle. A fermented diary food containing CLA was thus produced.

Sensory evaluation of the fermented diary food products produced in Example 6 and Comparative Example 4 (immediately after the production) and the control products having no CLA added thereto was conducted by a panel of five experts according to the following criteria:

Evaluation criteria:

+2: excellent;   +1: fair;   0: normal,   -1: inferior;   -2: poor

In the sensory evaluation, the fermented diary food according to the present invention was evaluated to be equivalent to the control product, whereas the product of Comparative Example 4 received inferior sensory evaluation due to its noticeable bitterness.

Table 3

|  | Control | Example 6 | Comparative Example 4 |
|---|---|---|---|
| Flavor evaluation (average) | +1.0 | +1.1 | -1.1 |

**Example 7: = Fermented soy milk food 3 =**

(Preparation of fermented soy milk base)

After adding 1 % glucose to soy milk (manufactured by Shikoku Kakoki Co.,Ltd., solid content 12.0 %, crude fat 2.4 %, crude protein 4.7 %), the soy milk was sterilized at 133 °C for 3 seconds, and homogenized at 15 MPa (150 kgf/cm$^2$). The soy milk was then inoculated with 0.01 % of *Bifidobacterium breve* YIT 4065 strain and 0.0001 % of *Lactocccus lactis* subsp. *lactis* YIT 2027 strain, and cultivation was continued until pH reached 4.6 to produce 300 g of fermented soy milk base.

**(Preparation of syrup)**

30 g of emulsified G-CLA (about 10 g as G-CLA) produced by emulsifying the G-CLA of Production Example 1 with sucrose fatty acid ester was dissolved in hot water with 20 g of fructose to a total weight of 200 g, and this solution was sterilized at 120 °C for 3 seconds.

After cooling the culture medium and the syrup to 10 °C, 0.1 % of yogurt flavor (manufactured by T. Hasegawa Co.,Ltd.), and then, agar solution (final concentration 0.5 %) were added to produce solid-type fermented soy milk.

The resulting fermented milk product had excellent flavor, and bacterial growth was not suppressed during the cultivation. When this product was stored at 10 °C for 14 days, bacterial death was at a level substantially equivalent to that of the one having no G-CLA added thereto.

**(Comparative Example 5)**

A fermented soy milk food was produced in accordance with a manner similar to the procedure of Example 7 except that CLA (CLA Active Linol, manufactured by Rinoru Oil Mills Co.,Ltd.) was used instead of G-CLA at an equivalent amount.

Sensory evaluation of the fermented soy milk food products produced in Example 7 and Comparative Example 5 (immediately after the production) and the control product having no CLA added thereto was conducted by a panel of five experts by the same procedure as that used in Example 6. The results are shown in Table 4.

In the sensory evaluation, the fermented soy milk food according to the present invention was evaluated to be substantially equivalent to the control product, whereas the product of Comparative Example 5 received inferior sensory evaluation due to its noticeable bitterness.

Table 4

|  | Control | Example 7 | Comparative Example 5 |
|---|---|---|---|
| Flavor evaluation (average) | +0.8 | +0.6 | -1.0 |

**Example 8: = Fermented dairy food 4 =**

Fresh raw milk was centrifuged for cream separation to prepare skim milk, and G-CLA produced in Production Example 1 was added to the thus produced skim milk at an amount of 1.0 %. After homogenization and sterilization in an autoclave at 121 °C for 10 minutes, 0.1 % of *Streptococcus thermophilus* YIT 2001 strain and 0.2 % of *Lactobacillus bulgaricus* YIT 0086 strain were inoculated, and the medium was cultivated at 37 °C for one day to obtain a sample according to the present invention. Also, 1.0 % of a free CLA (CLA 80 Active Linol) was added to the same skim milk, and after homogenization and sterilization, 0.1 % of the *Streptococcus thermophilus* strain and 0.2 % of the *Lactobacillus bulgaricus* strain were inoculated. The medium was cultivated at 37 °C for one day to obtain a comparative sample.

The inventive sample having G-CLA added thereto underwent a lactic fermentation as evidenced by the pH of 4.45, and the fermented milk could be produced since bacterial growth was not inhibited by the addition of the triglyceride CLA. In contrast, the comparative sample having free CLA added thereto failed to undergo lactic fermentation due to the death of the bacterium, and the fermented milk could not be produced.

**Claims**

1. A fermented food comprising a fermented food base obtained by adding a fermenting bacterium to an adequate medium for growing the fermenting bacterium, and a glyceride derivative containing a fatty acid having conjugated double bonds as its constituent fatty acid.

2. A fermented food according to claim 1, wherein said fermented food base comprises at least one fermented product selected from the group consisting of a fermented milk, a fermented soy milk, a fermented fruit juice, and a fermented vegetable emulsion juice.

3. A fermented food according to claim 1, wherein said fermenting bacterium comprises at least one bacterium selected from the group consisting of lactic acid bacteria and bacteria of genus *Bifidobacterium.*

4. A fermented food according to claim 1, wherein the fermented food contains said glyceride derivative at an amount of 0.1 % by weight to 8.0 % by weight in relation to the total weight of the fermented food.

5. A process for producing a fermented food comprising the steps of:

   adding a fermenting bacterium to an adequate medium for growing said fermenting bacterium to obtain a fermented food base; and
   adding a glyceride derivative containing a fatty acid having conjugated double bonds as its constituent fatty acid to said medium before or after the fermentation by said fermenting bacterium.

6. A process according to claim 5, wherein said step of obtaining said fermented food base comprises a fermentation step for producing at least one fermented product selected from the group consisting of a fermented milk, a fermented soy milk, a fermented fruit juice, and a fermented vegetable emulsion juice.

7. A process according to claim 5, wherein said fermenting bacterium comprises at least one bacterium selected from the group consisting of lactic acid bacteria and bacteria of genus *Bifidobacterium.*

8. A process according to claim 5, wherein said glyceride derivative is added at an amount of 0.1 % by weight to 8.0 % by weight in relation to the total weight of the fermented food.

# Fig.1

# Fig.2

## Fig.3

## Fig.4

Fig.5

# INTERNATIONAL SEARCH REPORT

| International application No. |
|---|
| PCT/JP01/03569 |

**A. CLASSIFICATION OF SUBJECT MATTER**
Int.Cl$^7$ A23C9/13, A23L2/38, A23L1/20

According to International Patent Classification (IPC) or to both national classification and IPC

**B. FIELDS SEARCHED**

Minimum documentation searched (classification system followed by classification symbols)
Int.Cl$^7$ A23C9/00~9/152, A23L2/38, A23L1/20

Documentation searched other than minimum documentation to the extent that such documents are included in the fields searched

Electronic data base consulted during the international search (name of data base and, where practicable, search terms used)
JICST FILE (JOIS)
JAFIC FILE (JOIS)

**C. DOCUMENTS CONSIDERED TO BE RELEVANT**

| Category* | Citation of document, with indication, where appropriate, of the relevant passages | Relevant to claim No. |
|---|---|---|
| X | JP, 6-276939, A (Snow Brand Milk Products Co., Ltd.), 04 October, 1994 (04.10.94)　(Family: none) | 1-8 |
| Y | JP, 2001-29010, A (Snow Brand Milk Products Co., Ltd.), 06 February, 2001 (06.02.01) | 1-8 |

☐ Further documents are listed in the continuation of Box C.    ☐ See patent family annex.

| * | Special categories of cited documents: |
|---|---|
| "A" | document defining the general state of the art which is not considered to be of particular relevance |
| "E" | earlier document but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 07 June, 2001 (07.06.01) | 19 June, 2001 (19.06.01) |

| Name and mailing address of the ISA/ Japanese Patent Office | Authorized officer |
|---|---|
| Facsimile No. | Telephone No. |

Form PCT/ISA/210 (second sheet) (July 1992)